# EUROPEAN PATENT SPECIFICATION

(11) **EP 3 640 000 B1**
(45) Date of publication and mention of the grant of the patent: **07.06.2023**
(21) Application number: 19201608.7
(22) Date of filing: 07.10.2019
(51) Int. Cl.: B29C 45/66, B29C 45/76, B29C 45/80, F16C 17/02

(54) **INJECTION MOLDING MACHINE**
SPRITZGIESSMASCHINE
MACHINE DE MOULAGE À INJECTION

(30) Priority: 17.10.2018 JP 2018195972
(43) Date of publication of application: 22.04.2020
(73) Proprietor: SUMITOMO HEAVY INDUSTRIES, LTD., Tokyo 141-6025 (JP)
(72) Inventor: MOROZUMI, Tomohito, Chiba, 263-0001 (JP); TANAKA, Yoshitada, Chiba, 263-0001 (JP); ITO, Yosuke, Chiba, 263-0001 (JP)
(74) Representative: Louis Pöhlau Lohrentz

(56) References cited:
- JP-A- 2000 141 436
- US-A- 2 694 935
- US-A- 3 722 315
- US-A1- 2016 319 874

## Description

### BACKGROUND OF THE INVENTION

### Field of the Invention

Certain embodiments of the present invention relate to an injection molding machine.

### Description of Related Art

An injection molding machine is known, in which a movable platen is moved by a link mechanism.

Japanese Unexamined Patent Publication No. 2000-141436 discloses a lubrication device of a toggle link mechanism having a seal structure including seal grooves provided on both end portions of a bush inner diameter surface and seal materials fitted to the seal grooves. United States Patent No. 2694935 discloses a reciprocating and locking apparatus for die machines which includes a connection portion connecting a reciprocating member and a link. United States Patent No. 3722315 discloses a joint connection which includes a male portion and a movable closure plate. Unites States Unexamined Patent Publication No. 2016/319874 discloses a bearing arrangement which comprises a bearing cover and a bearing block bearing thereon.

### SUMMARY OF THE INVENTION

Meanwhile, if an injection molding machine is operated for a long time, a bush is worn. If the bush is worn, maintenance is performed to replace the bush.

Accordingly, an object of the present invention is to provide an injection molding machine capable of improving maintainability.

According to a first embodiment of the present invention, there is provided an injection molding machine including: a toggle mechanism which connects a movable platen and a rear platen, in which the toggle mechanism includes a plurality of links, a first connection portion which connects the movable platen and the link, a second connection portion which connects the links to each other, and a third connection portion which connects the rear platen and the link, at least one of a bearing portion of the movable platen, a bearing portion of the rear platen, and a bearing portion of the link has a main body-side bearing portion and a division bearing portion which is removable from the main body-side bearing portion, and the main body-side bearing portion and the division bearing portion support a connection pin with a gap between the main body-side bearing portion and the division bearing portion.

According to a second embodiment of the present invention, there is provided an injection molding machine including: a toggle mechanism which connects a movable platen and a rear platen, in which the toggle mechanism includes a plurality of links, a first connection portion which connects the movable platen and the link, a second connection portion which connects the links to each other, and a third connection portion which connects the rear platen and the link, at least one of a bearing portion of the movable platen, a bearing portion of the rear platen, and a bearing portion of the link has a main body-side bearing portion and a division bearing portion which is removable from the main body-side bearing portion, and the main body-side bearing portion and the division bearing portion are horizontally divided.

According to a third embodiment of the present invention, there is provided an injection molding machine including: a toggle mechanism which connects a movable platen and a rear platen, in which the toggle mechanism includes a plurality of links, a first connection portion which connects the movable platen and the link, a second connection portion which connects the links to each other, and a third connection portion which connects the rear platen and the link, and at least one of a bearing portion of the movable platen, a bearing portion of the rear platen, and a bearing portion of the link has a U-shaped bearing portion.

According to a forth embodiment of the present invention, there is provided an injection molding machine including: a toggle mechanism which connects a movable platen and a rear platen, in which the toggle mechanism includes a plurality of links, a first connection portion which connects the movable platen and the link, a second connection portion which connects the links to each other, and a third connection portion which connects the rear platen and the link, and at least one of a bearing portion of the movable platen, a bearing portion of the rear platen, and a bearing portion of the link has a slide bearing portion which slides with respect to a main body.

According to the present invention, it is possible to provide the injection molding machine capable of improving the maintainability.

### BRIEF DESCRIPTION OF THE DRAWINGS

Fig. 1 is a view showing a state when a mold opening of an injection molding machine according to an embodiment is completed.
Fig. 2 is a view showing a state when a mold of the injection molding machine according to the embodiment is clamped.
Fig. 3 is a cross-sectional view of a connection portion between a second link and a bearing portion of a toggle support according to the embodiment.
Fig. 4 is a cross-sectional view of the bearing portion of the toggle support according to the embodiment.
Figs. 5A to 5F are views explaining an operation at the time of maintenance.
Figs. 6A and 6B are cross-sectional views of a connection portion between a second link and a bearing portion of a toggle support according to a comparative example.
Fig. 7 is a cross-sectional schematic view showing a structure of a bearing portion of a toggle support according to another embodiment.
Fig. 8 is a cross-sectional schematic view showing a structure of a bearing portion of a toggle support according to still another embodiment.
Fig. 9 is a cross-sectional schematic view showing a structure of a bearing portion of a toggle support according to still another embodiment.
Fig. 10 is a cross-sectional schematic view showing a structure of a bearing portion of a toggle support according to still another embodiment.

### DETAILED DESCRIPTION OF THE INVENTION

Hereinafter, an embodiment of the present invention is described with reference to the drawings. In each drawing, the same or corresponding reference numerals are assigned to the same or corresponding configurations, and descriptions thereof are omitted.

### (Injection Molding Machine)

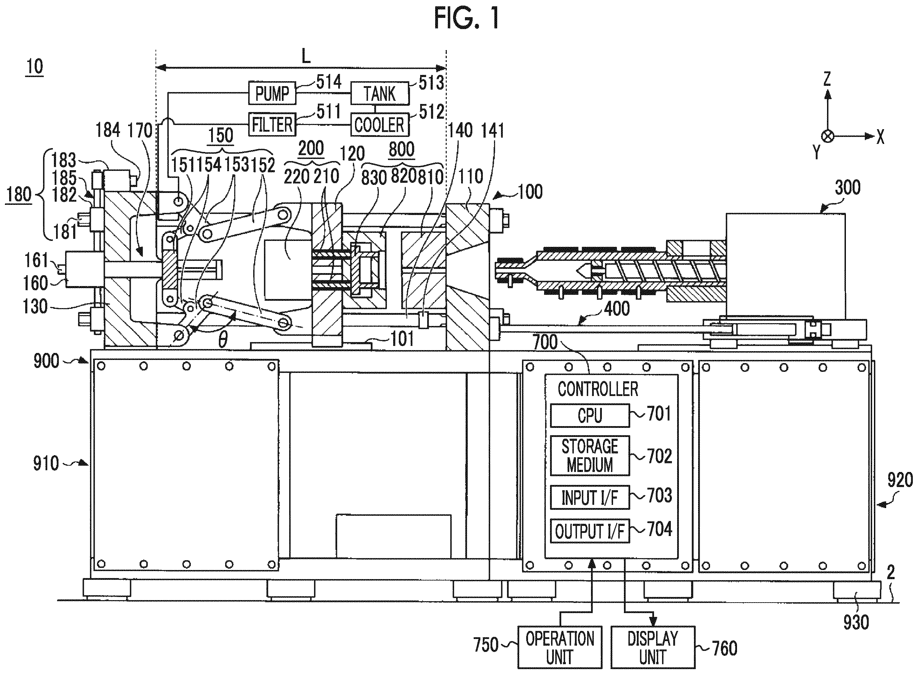

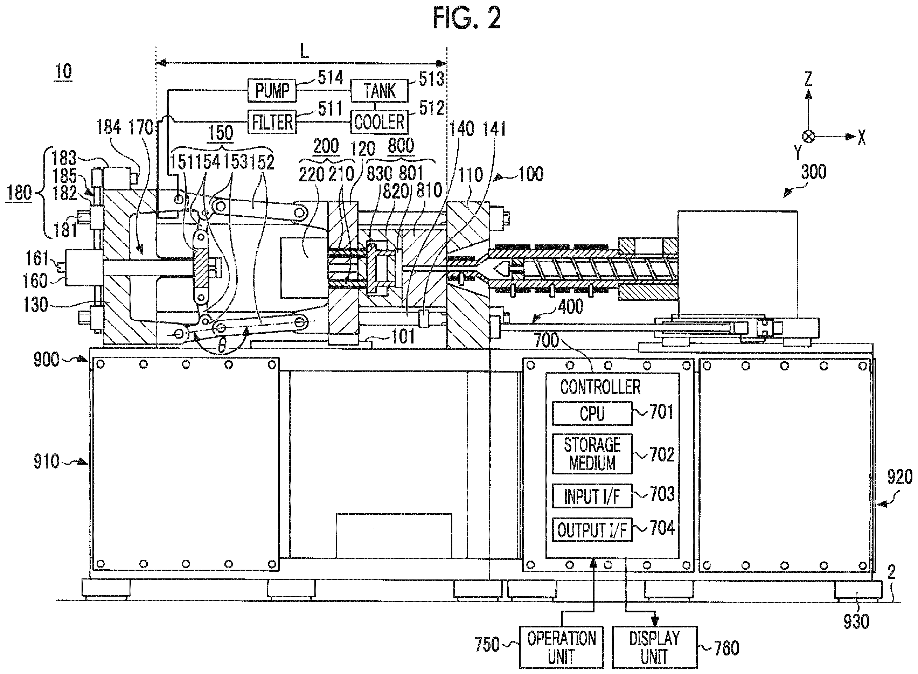

Fig. 1 is a view showing a state when mold opening of an injection molding machine according to an embodiment is completed. Fig. 2 is a view showing a state when a mold of the injection molding machine according to the embodiment is clamped. In Figs . 1 and 2, an X axis direction, a Y axis direction, and a Z axis direction are directions perpendicular to each other. The X axis direction and the Y axis direction indicate a horizontal direction, and the Z axis direction indicates a vertical direction. In a case where the mold clamping unit 100 is a horizontal type mold clamping unit, the X axis direction is mold opening and closing directions, and the Y axis direction is a width direction of an injection molding machine 10. A negative side in the Y axis direction is referred to as an operation side, and a positive side in the Y axis direction is referred to as a counter operation side.

As shown in Figs. 1 and 2, the injection molding machines 10 include the mold clamping unit 100, an ejector unit 200, an injection unit 300, a movement unit 400, a controller 700, and a frame 900. The frame 900 includes a mold clamping unit frame 910 and an injection unit frame 920. Each of the mold clamping unit frame 910 and the injection unit frame 920 is installed on a floor 2 via a leveling adjuster 930. The controller 700 is disposed in an internal space of the injection unit frame 920. Hereinafter, each component of the injection molding machine 10 will be described.

### (Mold Clamping Unit)

In descriptions of the mold clamping unit 100, a movement direction (X axis positive direction) of a movable platen 120 when a mold is closed is defined as a front side, and a movement direction (X axis negative direction) of the movable platen 120 when the mold is open is defined as a rear side.

The mold clamping unit 100 performs mold closing, pressure rising, mold clamping, decompression, and mold opening of a mold unit 800. The mold unit 800 includes a stationary mold 810 and a movable mold 820.

For example, the mold clamping unit 100 is a horizontal type clamping unit and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the mold clamping unit frame 910. The stationary mold 810 is attached to a surface of the stationary platen 110 facing the movable platen 120.

The movable platen 120 is disposed to be movable in the mold opening and closing directions with respect to the mold clamping unit frame 910. A guide 101 which guides the movable platen 120 is placed on the mold clamping unit frame 910. The movable mold 820 is attached to a surface of the movable platen 120 facing the stationary platen 110. The movable platen 120 moves forward or rearward with respect to the stationary platen 110, and thus, the mold closing, the pressure rising, the mold clamping, the decompression, and the mold opening of the mold clamping unit 800 are performed.

The toggle support 130 is connected so as to be separated from the stationary platen 110, and is placed on the mold clamping unit frame 910 to be movable in mold opening and closing directions. In addition, the toggle support 130 may be disposed to be movable along a guide which is placed on the mold clamping unit frame 910. The guide of the toggle support 130 may be also used as the guide 101 of the movable platen 120.

In addition, in the present embodiment, the stationary platen 110 is disposed to be fixed to the mold clamping unit frame 910, and the toggle support 130 is disposed to be movable in the mold opening and closing directions with respect to the mold clamping unit frame 910. However, the toggle support 130 may be disposed to be fixed to the mold clamping unit frame 910, and the stationary platen 110 may be disposed to be movable in the mold opening and closing directions with respect to the mold clamping unit frame 910.

The tie bar 140 connects the stationary platen 110 and the toggle support 130 with a gap L in the mold opening and closing directions. A plurality of (for example, four) tie bars 140 may be used. The plurality of tie bars 140 are disposed to be parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each link group includes a first link 152 and a second link 153 which are bendably/stretchably connected by pins or the like. The first link 152 is attached to the movable platen 120 so as to be oscillated by pins or like. The second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft and a screw nut which is screwed to the screw shaft. A ball or a roller may be interposed between the screw shaft and the screw nut.

The mold clamping unit 100 performs a mold closing process, a pressure rising process, a mold clamping process, a decompression process, a mold opening process, or the like under the control of the controller 700.

In the mold closing process, the mold clamping motor 160 is driven and the crosshead 151 moves forward to a mold closing completion position at a set movement speed. Accordingly, the movable platen 120 moves forward and the movable mold 820 comes into contact with the stationary mold 810. For example, a position or speed of the crosshead 151 is detected using a mold clamping motor encoder 161 or the like. The mold clamping motor encoder 161 detects the rotation of the mold clamping motor 160 and sends a signal indicating the detection result to the controller 700.

In addition, a crosshead position detector which detects the position of the crosshead 151 and a crosshead movement speed detector which detects the movement speed of the crosshead 151 are not limited to the mold clamping motor encoder 161, and a general detector can be used. In addition, a movable platen position detector which detects the position of the movable platen 120 and a movable platen movement speed detector which detects the movement speed of the movable platen 120 are not limited to the mold clamping motor encoder 161, and a general detector can be used.

In the pressure rising process, the mold clamping motor 160 is further driven, the crosshead 151 further moves forward from the mold closing completion position to a mold clamping position, and thus, the mold clamping force is generated.

In the mold clamping process, the mold clamping motor 160 is driven, and the position of the crosshead 151 is maintained at the mold clamping position. In the mold clamping process, the mold clamping force generated in the pressure rising process is maintained. In the mold clamping process, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained.

One cavity space 801 may be provided or a plurality of cavity spaces 801 may be provided. In the latter case, a plurality of molding products can be simultaneously obtained. An insert material may be disposed in a portion of the cavity space 801, and the other portion of the cavity space 801 may be filled with the molding material. The insert material and the molding material are integrated with each other, and thus, the molding product can be obtained.

In the decompression process, the mold clamping motor 160 is driven, and the crosshead 151 moves rearward from the mold clamping position to a mold opening start position. Accordingly, the movable platen 120 moves rearward, and the mold clamping force is reduced. The mold opening start position and the mold closing completion position may be the same position as each other.

In the mold opening process, the mold clamping motor 160 is driven and the crosshead 151 moves rearward from the mold opening start position to a mold opening completion position at a set movement speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process, the pressure rising process, and the mold clamping process are collectively set as a series of setting conditions. For example, a movement speed or position (including mold opening start position, movement speed switching position, mold closing completion position, and mold clamping position) of the crosshead 151 and the mold clamping force in the mold closing process and the pressure rising process are collectively set as a series of setting conditions. The mold closing start position, the movement speed switching position, the mold closing completion position, and the mold clamping position are arranged in this order from the rear side to the front side and indicate start points and end points of sections where the movement speed is set. The movement speed is set for each section. The movement speed switching position may be one or more. The movement speed switching position may not be set. Only one of the mold clamping position and the mold clamping force may be set.

Setting conditions are similarly set in the decompression process and the mold opening process. For example, the movement speed or positions (mold opening start position, movement speed switching position, and mold opening completion position) of the crosshead 151 in the decompression process and the mold opening process are collectively set as a series of setting conditions. The mold opening start position, the movement speed switching position, and the mold opening completion position are arranged in this order from the from side to the rear side and indicate start points and end points of sections where the movement speed is set. The movement speed is set for each section. The movement speed switching position may be one or more. The movement speed switching position may not be set. The mold opening start position and the mold closing completion position are the same as each other. Moreover, the mold opening completion position and the mold closing start position may be the same as each other.

In addition, instead of the movement speed, the positions, or the like of the crosshead 151, a movement speed, positions, or the like of the movable platen 120 maybe set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a mold touch where the movable mold 820 comes into contact with the stationary mold 810 becomes a predetermined angle.

The mold clamping unit 100 includes the mold space adjustment mechanism 180. The mold space adjustment mechanisms 180 performs the mold space adjustment by adjusting the gap L between the stationary platen 110 and the toggle support 130. In addition, for example, a timing of the mold space adjustment is performed from an end of the molding cycle to a start of the next molding cycle. For example, the mold space adjustment mechanism 180 includes a screw shaft 181 which is formed on a rear end portion of the tie bar 140, a screw nut 182 which is supported by the toggle support 130 to be rotatable and immovable forward or rearward, and a mold space adjustment motor 183 which rotates the screw nut 182 screwed to the screw shaft 181.

The screw shaft 181 and the screw nut 182 are provided for each tie bar 140. A rotational driving force of the mold space adjustment motor 183 may be transmitted to a plurality of screw nuts 182 via a rotational driving force transmission portion 185. The plurality of screw nuts 182 can be synchronously rotated with each other. In addition, it is possible to rotate the plurality of screw nuts 182 individually by changing a transmission path of the rotational driving force transmission portion 185.

For example, the rotational driving force transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotational driving force transmission portion 185 may include a belt, a pulley, or the like instead of the gear.

An operation of the mold space adjustment mechanism 180 is controlled by the controller 700. The controller 700 drives the mold space adjustment motor 183 to rotate the screw nut 182. As a result, a position of the toggle support 130 with respect to the tie bar 140 is adjusted, and thus, the gap L between the stationary platen 110 and the toggle support 130 is adjusted. Moreover, a combination of a plurality of the mold space adjustment mechanisms may be used.

The gap L is detected using a mold space adjustment motor encoder 184. The mold space adjustment motor encoder 184 detects a rotation amount or a rotation direction of the mold space adjustment motor 183 and sends a signal indicating a detection result to the controller 700. The detection result of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

The ejector unit 200 is attached to the movable platen 120 and moves forward or rearward together with the movable platen 120. The ejector unit 200 performs an ejection process under the control of the controller 700. In the ejection process, an ejector rod 210 is moved forward from a standby position to an ejection position at a set movement speed by a driving mechanism 220, and thus, a movable member 830 is moved forward and the molding product is ejected. Thereafter, the ejector rod 210 is moved rearward at a set movement speed by the driving mechanism 220, and thus, the movable member 830 is moved rearward to an original standby position.

### (Injection Unit)

The injection unit 300 is disposed to be movable forward or rearward with respect to the mold unit 800. The injection unit 300 comes into contact with the mold unit 800, and thus, the cavity space 801 in the mold unit 800 is filled with the molding material. The injection unit 300 performs a plasticizing process, a filling process, a holding pressure process, or the like under the control of the controller 700. The filling process and holding pressure process are collectively referred to as an injection process. In the plasticizing process, a predetermined amount of liquid molding material is accumulated. In the filling process, the cavity space 801 in the mold unit 800 is filled with the liquid molding material accumulated in the plasticizing process. In the holding pressure process, a holding pressure of the molding material is maintained at a set pressure.

### (Movement Unit)

The movement unit 400 moves the injection unit 300 forward or rearward with respect to the mold unit 800.

### (Controller)

For example, the controller 700 includes a computer, and as shown in Figs. 1 and 2, the controller 700 includes a Central Processing Unit (CPU) 701, a storage medium 702 such as a memory, an input interface 703, and an output interface 704. The controller 700 performs various controls by causing the CPU 701 to execute a program stored in the storage medium 702. In addition, the controller 700 receives a signal from the outside through the input interface 703 and transmits a signal to the outside through the output interface 704.

The controller 700 repeatedly performs the plasticizing process, the mold closing process, the pressure rising process, the mold clamping process, the filling process, the holding pressure process, a cooling process, the decompression process, the mold opening process, the ejection process, or the like to repeatedly manufacture the molding product. A series of operations to obtain the molding product, for example, an operation from the start of the plasticizing process to the start of the next plasticizing process is also referred to as a "shot" or a "molding cycle". In addition, a time required for once shot is also referred to as a "molding cycle time" or a "cycle time".

For example, the once molding cycle includes the plasticizing process, the mold closing process, the pressure rising process, the mold clamping process, the filling process, the hold pressure process, the cooling process, the decompression process, the mold opening process, and the ejection process in this order. Here, this order is an order of the start of each process. The filling process, the holding pressure process, and the cooling process are performed between the mold clamping processes. The start of the mold clamping process may coincide with the start of the filling process. The end of the decompression process coincides with the start of the mold opening process.

In addition, in order to shorten the molding cycle time, the plurality of processes may be simultaneously performed.

In addition, the once molding cycle may include a process other than includes the plasticizing process, the mold closing process, the pressure rising process, the mold clamping process, the filling process, the hold pressure process, the cooling process, the decompression process, the mold opening process, and the ejection process.

The controller 700 is connected to an operation unit 750 or the display unit 760. The operation unit 750 receives an input operation from a user and outputs a signal corresponding to the input operation to the controller 700. The display unit 760 displays a display screen corresponding to the input operation of the operation unit 750 under the control of the controller 700.

The operation screen is used for the setting of the injection molding machine 10 or the like. A plurality of display screens are provided, and thus, are displayed to be switched or to overlap each other. A user operates the operation unit 750 while viewing the display screen displayed by the display unit 760 to perform the setting (including an input of a set value) of the injection molding machine 10 or the like.

For example, the operation unit 750 and the display unit 760 may include a touch panel to be integrated with each other. In addition, in the present embodiment, the operation unit 750 and the display unit 760 are integrated with each other but may be provided independently. In addition, a plurality of the operation units 750 may be provided. The operation unit 750 and the display unit 760 are disposed on the negative side of the mold clamping unit 100 (more specifically, the stationary platen 110) in the Y axis direction. The negative side in the Y axis direction is referred to as the operation side, and the positive side in the Y axis direction is referred to as the counter operation side.

As shown in Figs. 1 and 2, in the toggle mechanisms 150, a connection portion which connects a bearing portion of the movable platen 120 and the first link 152 by a connection pin is formed. Similarly, in the toggle mechanisms 150, a connection portion which connects the first link 152 and the second link 153 by a connection pin is formed. In the toggle mechanism 150, a connection portion which connects the second link 153 and a bearing portion 60 of the toggle support 130 by a connection pin 50 is formed. In the toggle mechanism 150, a connection portion which connects the second link 153 and the third link 154 by a connection pin is formed. In the toggle mechanisms 150, a connection portion which connects the third link 154 and the crosshead 151 by a connection pin is formed.

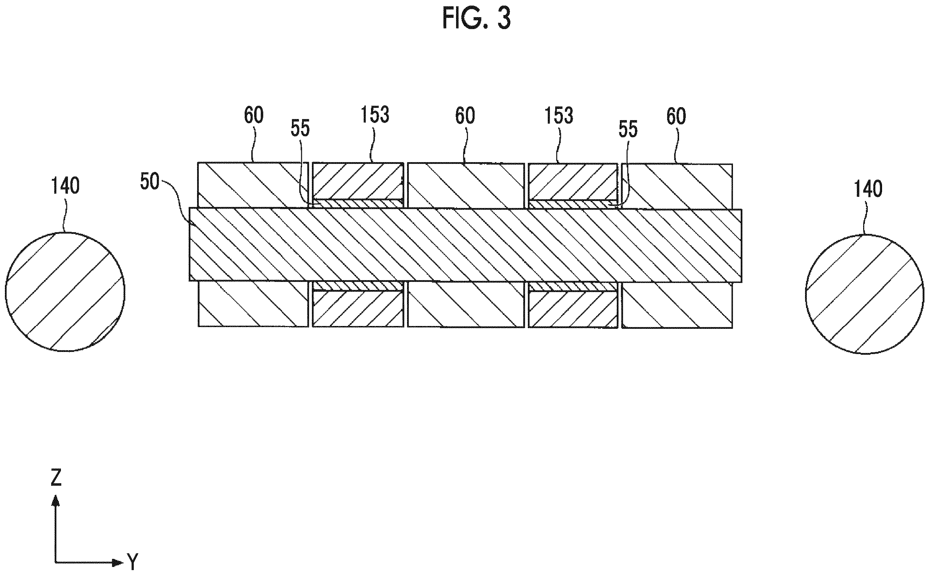

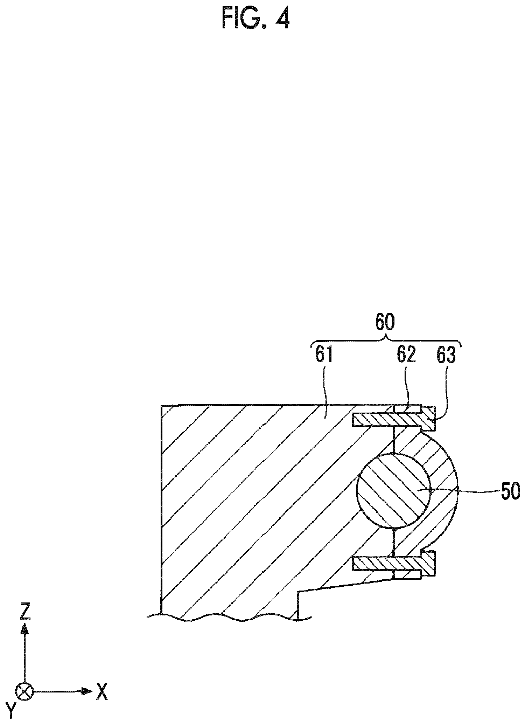

A structure of the connection portion will be described with reference to Figs. 3 and 4. Fig. 3 is a cross-sectional view of a connection portion between the second link 153 and the bearing portion 60 of the toggle support 130 according to the embodiment. In addition, Fig. 3 is a cross-sectional view taken along a plane which is parallel to an YZ plane and passes through an axis of the connection pin 50. Moreover, in Fig. 3, a structure behind the cross section is not shown.

The connection pin 50 is fixed to be not rotatable to a bearing hole of one connection member (for example, bearing portion 60 of toggle support 130) . The bush 55 is press-fitted to the other connection member (for example, second link 153) . The connection pin 50 is inserted into the bush 55. Sliding surfaces of the bush 55 and the connection pin 50 are lubricated. Here, as shown in Fig. 3, a height position of the connection pin 50 inserted into the bearing portion 60 interferes with a height position of the tie bar 140.

Fig. 4 is a cross-sectional view of the bearing portion 60 of the toggle support 130 according to the embodiment. In addition, Fig. 4 is a cross-sectional view taken along a plane which is parallel to an XZ plane and passes through an axis of the bearing portion 60. Moreover, in Fig. 4, a structure behind the cross section is not shown.

The bearing portion 60 includes a height position changing mechanism which changes the height position of the connection pin 50 to a position different from the height position of the tie bar 140. For example, the bearing portion 60 includes a main body-side bearing portion 61 of a main body side of the toggle support 130, a division bearing portion 62, and bolts 63. The bearing portion 60 of the connection pin 50 is constituted by the main body-side bearing portion 61 and the division bearing portion 62. The division bearing portion 62 is configured to be removable from the main body-side bearing portion 61. The main body-side bearing portion 61 and the division bearing portion 62 vertically divides a bearing hole supporting the connection pin 50. The division bearing portion 62 is fixed to the main body-side bearing portion 61 by the bolts 63.

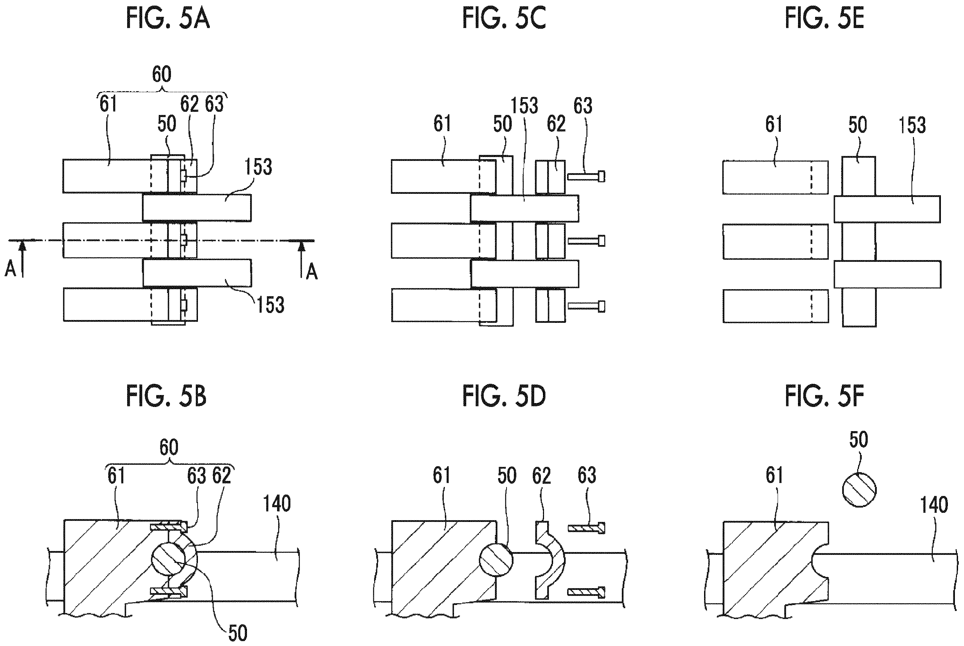

Next, in the injection molding machine 10 according to the embodiment, an operation when the bush 55 is replaced will be described. Figs. 5A to 5F are views explaining an operation at the time of maintenance, Figs. 5A, 5C, and 5E are plan views, and Figs. 5B, 5D, and 5F are cross-sectional views. In addition, each cross-sectional view is a cross-sectional view taken along line A-A which is parallel to the XZ plane and passes through the bearing portion 60. In addition, in each plan view, an inner structure is not shown. Moreover, in each cross-sectional view, the second link 153 is not shown.

Figs. 5A and 5B, the division bearing portion 62 is fixed to the main body-side bearing portion 61 by the bolts 63. The connection pin 50 is supported by the bearing portion 60 (main body-side bearing portion 61 and division bearing portion 62) .

At the time of the maintenance, as shown in Figs. 5C and 5D, the bolts 63 and the division bearing portion 62 are removed from the main body-side bearing portion 61. Accordingly, even when the connection pin 50 is not pulled out from the second link 153, it is possible to move the connection pin 50.

Next, as shown in Figs. 5E and 5F, the connection pin 50 is removed from the main body-side bearing portion 61, and the connection pin 50 is shifted from the height of the tie bar 140. In this way, the bearing portion 60 constitutes a height position changing mechanism which changes the height position of the connection pin 50 to the position different from the height position of the tie bar 140 by removing the division bearing portion 62 from the main body-side bearing portion 61. For example, as shown in Figs. 5F, the connection pin 50 is shifted above the tie bar 140. In addition, a connection pin between the second link 153 and the first link 152 and a connection pin between the second link 153 and the third link 154 may be removed in advance. Accordingly, the connection pin 50 can be pulled out from the second link 153 without the connection pin 50 interfering with the tie bar 140. Moreover, it is possible to replace the bush 55 (refer to Fig. 3) of the second link 153. After the bush 55 is replaced, assembly is performed in a reverse procedure.

Moreover, in the connection portions of the toggle support 130, upper connection portions are described as examples. However, the same is applied to lower connection portions, and repeated descriptions are omitted.

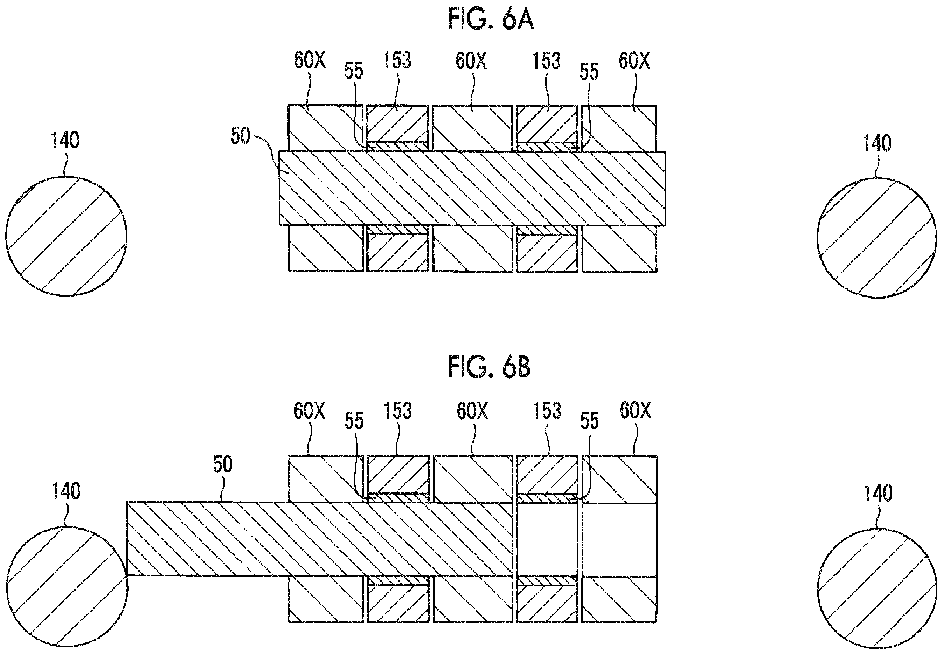

Here, in an injection molding machine according to a comparative example, an operation when the bush 55 is replaced will be described. Figs. 6A and 6B are cross-sectional views of a connection portion between the second link 153 and a bearing portion 60X of the toggle support 130 according to a comparative example. Fig. 6A shows a state where the connection pin 50 is inserted into the connection portion. Compared to the injection molding machine 10 according to the embodiment, in the injection molding machine according to the comparative example, a configuration of the bearing portion 60X of the toggle support 130 is different. The bearing portion 60X cannot be divided. Other configurations are similar to those of the embodiment, and repeated descriptions are omitted.

When the bush 55 press-fitted to the right second link 153 is replaced, as shown in Fig. 6B, the connection pin 50 is shifted left, and the connection pin 50 is pulled out from the right bearing portion 60X and the bush 55 of the right second link 153. Similarly, the right second link 153 is shafted in an up-down direction, and thereafter, the bush 55 is replaced. When the bush 55 press-fitted to the left second link 153 is replaced, the connection pin 50 is shifted right, and the connection pin 50 is pulled out from the left bearing portion 60X and the bush 55 of the right second link 153. Thereafter, the left second link 153 is shafted in an up-down direction, and thereafter, the bush 55 is replaced.

Here, a height position of the connection pin 50 inserted into the bearing portion 60X and a height position of the tie bar 140 interfere with each other, and thus, a movement range of the connection pin 50 is restricted. Accordingly, as shown in Fig. 6B, in order to pull out the connection pin 50 from the right bearing portion 60X and the bush 55 of the right second link 153, it is necessary to widen a space from the left bearing portion 60X to the left tie bar 140. For example, it is necessary to set the space from the left bearing portion 60X to the left tie bar 140 to be equal or more than a width between the right bearing portion 60X and the bush 55 of the right second link 153. Similarly, it is necessary to set the space from the right bearing portion 60X to the right tie bar 140 to be equal or more than a width between the left bearing portion 60X and the bush 55 of the left second link 153. Accordingly, a width of the bearing portion 60X or the bush 55 of the second link 153 is restricted.

Meanwhile, as described with a comparison between Fig. 3 and Fig. 6A, in the connection portion of the injection molding machine 10 according to the embodiment, it is possible to widen the width of the bearing portion 60 compared to the comparative example. In addition, it is possible to widen the widths of the second link 153 and the bush 55 compared to the comparative example . Accordingly, when the mold is clamped, it is possible to reduce a surface pressure between the connection pin 50 and the bush 55. Therefore, it is possible to suppress wear of the bush 55.

Moreover, in the connection portion of the injection molding machine according to the comparative example, when the connection pin 50 is pulled out, the connection pin 50 and the tie bar 140 interfere with each other. Accordingly, in the connection portion of the injection molding machine according to the comparative example, the connection pin 50 is moved so as to replace the bush 55 of the right second link 153 and the bush 55 of the left second link 153 one by one. Meanwhile, in the connection portion of the injection molding machine 10 according to the embodiment, the connection pin 50 and the tie bar 140 do not interfere with each other, and the connection pin 50 can be pulled out from both the bush 55 of the right second link 153 and the bush 55 of the left second link 153. Accordingly, the connection portion of the injection molding machine 10 according to the embodiment can improve maintainability when the bush 55 is replaced.

Moreover, when the mold is clamped, a force is applied in a direction in which the connection pin 50 is pressed against the main body-side bearing portion 61. Accordingly, even in a configuration in which the division bearing portion 62 can be divided from the main body-side bearing portion 61, when the mold is clamped, the bearing portion 60 can support the connection pin 50.

Hereinbefore, the embodiment of the injection molding machine is described. However, the present invention is not limited to the above-described embodiment, and various modifications and improvements are possible within a scope of a concept of the present invention described in claims.

The case of the connection portion between the bearing portion of the toggle support 130 and the second link 153 is described as an example. However, the present invention may be applied to a connection portion between a bearing portion of the movable platen 120 and the first link 152. In addition, the present invention may be applied to a connection portion between a bearing portion of the crosshead 151 and the third link 154.

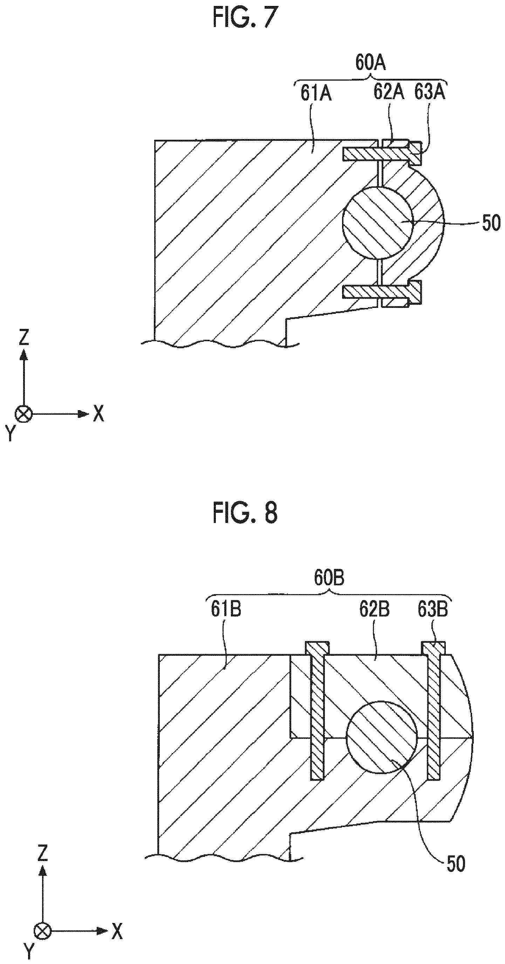

Fig. 7 is a cross-sectional schematic view showing a structure of a bearing portion 60A of the toggle support 130 according to another embodiment. Compared to the injection molding machine 10 according to the embodiment, in the injection molding machine according to another embodiment, a configuration of the bearing portion 60A of the toggle support 130 is different. Other configurations are similar, and repeated configurations are omitted.

The bearing portion 60A includes a height position changing mechanism which changes the height position of the connection pin 50 to the position different from the height position of the tie bar 140. For example, the bearing portion 60A includes a main body-side bearing portion 61A of the main body side of the toggle support 130, a division bearing portion 62A, and bolts 63A. The bearing portion 60A of the connection pin 50 is constituted by the main body-side bearing portion 61A and the division bearing portion 62A. The division bearing portion 62A is configured to be removable from the main body-side bearing portion 61A. In addition, the main body-side bearing portion 61A and the division bearing portion 62A vertically divides a bearing hole supporting the connection pin 50. The division bearing portion 62A is fixed to the main body-side bearing portion 61A by the bolts 63A.

Here, the main body-side bearing portion 61A and the division bearing portion 62A supports the connection pin 50 with a gap between the main body-side bearing portion 61A and the division bearing portion 62A. Accordingly, when the bolts 63A are tightened, a preload can be applied to the connection pin 50. Accordingly, it is possible to suppress fretting wear of the connection pin 50 and the bearing portion 60A of the toggle support 130 due to a long-term operation.

Fig. 8 is a cross-sectional schematic view showing a structure of a bearing portion 60B of the toggle support 130 according to still another embodiment. Compared to the injection molding machine 10 according to the embodiment, in the injection molding machine according to still another embodiment, a configuration of the bearing portion 60B of the toggle support 130 is different. Other configurations are similar, and repeated configurations are omitted.

The bearing portion 60B includes a height position changing mechanism which changes the height position of the connection pin 50 to the position different from the height position of the tie bar 140. For example, the bearing portion 60B includes a main body-side bearing portion 61B of the main body side of the toggle support 130, a division bearing portion 62B, and bolts 63B. The bearing portion 60B of the connection pin 50 is constituted by the main body-side bearing portion 61B and the division bearing portion 62B. The division bearing portion 62B is configured to be removable from the main body-side bearing portion 61B. In addition, the main body-side bearing portion 61B and the division bearing portion 62B horizontally divides a bearing hole supporting the connection pin 50. The division bearing portion 62B is fixed to the main body-side bearing portion 61B by the bolts 63B.

In this way, a division direction of the bearing portion is not limited to a vertical direction shown in Fig. 4 but may be a horizontal direction shown in Fig. 8. Moreover, although not shown, the division direction of the bearing portion may be inclined.

In addition, in Fig. 8, the division bearing portion 62B is provided on an upper side of the bearing portion 60B. However, the division bearing portion 62B may be provided on a lower side of the bearing portion 60B. Moreover, in the connection portions of the toggle support 130, the upper connection portion may be configured such that the division bearing portion 62B is provided on the upper side of the bearing portion 60B, and the lower connection portion may be configured such that the division bearing portion 62B is provided on the lower side of the bearing portion 60B. In addition, both the upper connection portion and the lower connection portion may be configured such that the division bearing portion 62B is provided on the upper side of the bearing portion 60B, and both the upper connection portion and the lower connection portion may be configured such that the division bearing portion 62B is provided on the lower side of the bearing portion 60B.

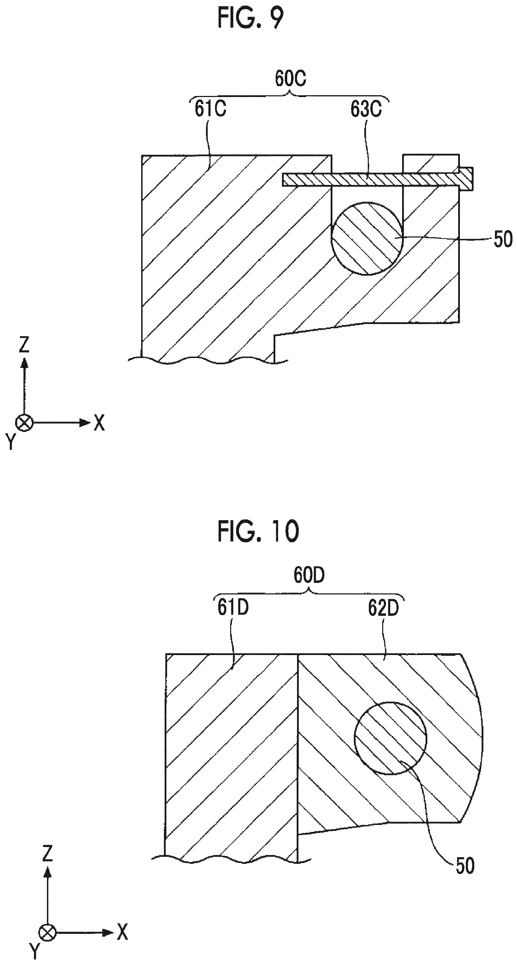

Fig. 9 is a cross-sectional schematic view showing a structure of a bearing portion 60C of the toggle support 130 according to still another embodiment. Compared to the injection molding machine 10 according to the embodiment, in the injection molding machine according to still another embodiment, a configuration of the bearing portion 60C of the toggle support 130 is different. Other configurations are similar, and repeated configurations are omitted.

The bearing portion 60C includes a height position changing mechanism which changes the height position of the connection pin 50 to the position different from the height position of the tie bar 140. For example, the bearing portion 60C includes a main body-side bearing portion 61C having an approximately U-shaped bearing portion in which the connection pin 50 is disposed. In addition, the connection pin 50 may have a retaining member 63C which prevents the connection pin 50 from coming out of the approximately U-shaped bearing portion.

At the time of maintenance, it is possible to move the connection pin 50 in an up direction by removing the retaining member 63C. Accordingly, it is possible to shift the height position of the connection pin 50 from the height position of the tie bar 140.

Fig. 10 is a cross-sectional schematic view showing a structure of a bearing portion 60D of the toggle support 130 according to still another embodiment. Compared to the injection molding machine 10 according to the embodiment, in the injection molding machine according to still another embodiment, a configuration of the bearing portion 60D of the toggle support 130 is different. Other configurations are similar, and repeated configurations are omitted.

The bearing portion 60D includes a height position changing mechanism which changes the height position of the connection pin 50 to the position different from the height position of the tie bar 140. For example, the bearing portion 60D has a plate portion 61D of the toggle support 130 and a slide bearing portion 62D. The slide bearing portion 62D is configured to be able to slide in an up-down direction with respect to the plate portion 61D.

At the time of maintenance, in the bearing portion 60D, the connection pin 50 can be moved in the up direction for each slide bearing portion 62D. Accordingly, it is possible to shift the height position of the connection pin 50 from the height position of the tie bar 140.

### Brief Description of the Reference Symbols

- 10:: injection molding machine
- 50:: connection pin
- 55:: bush
- 60, 60A to 60D:: bearing portion
- 61:: main body-side bearing portion
- 62:: division bearing portion
- 63:: bolt
- 110:: stationary platen
- 120:: movable platen
- 130:: toggle support (rear platen)
- 140:: tie bar
- 150:: toggle mechanism (link mechanism)
- 151:: crosshead (link)
- 152:: first link (link)
- 153:: second link (link)
- 154:: third link (link)

## Claims

1. An injection molding machine (10) comprising:
a stationary platen (110);
a toggle mechanism (150) which connects a movable platen (120) and a rear platen (130); and
a tie bar (140) which connects the stationary platen (110) and the rear platen (130) in mold opening and closing directions,
**characterized in that**
the toggle mechanism (150) includes
a plurality of links (151, 152, 153, 154),
a first connection portion which connects the movable platen (120) and the link (152),
a second connection portion which connects the links (152, 153) to each other, and
a third connection portion which connects the rear platen (130) and the link (154),
at least one of the first to third connection portions includes a height position changing mechanism which changes a height position of a connection pin (50) of the connection portion,
at least one of a bearing portion (60, 60A to 60D) of the movable platen (120), a bearing portion (60, 60A to 60D) of the rear platen (130), and a bearing portion (60, 60A to 60D) of the link (151, 152, 153, 154) has a main body-side bearing portion (61) and a division bearing portion (62) which is removable from the main body-side bearing portion (61),
the main body-side bearing portion (61) and the division bearing portion (62) support the connection pin (50) with a gap between the main body-side bearing portion (61) and the division bearing portion (62), and
a height position of the connection pin (50) inserted into the bearing portion interferes with a height position of the tie bar (140).

2. The injection molding machine (10) according to claim 1, further comprising:
a tie bar (140) which connects a stationary platen (110) and the rear platen (130).

3. The injection molding machine (10) according to claim 1,
wherein the main body-side bearing portion (61) and the division bearing portion (62) are vertically divided.

4. An injection molding machine (10) comprising:
a stationary platen (110);
a toggle mechanism (150) which connects a movable platen (120) and a rear platen (130); and
a tie bar (140) which connects the stationary platen (110) and the rear platen (130) in mold opening and closing directions,
**characterized in that**
the toggle mechanism (150) includes
a plurality of links (151, 152, 153, 154),
a first connection portion which connects the movable platen (120) and the link (152),
a second connection portion which connects the links (152, 153) to each other, and
a third connection portion which connects the rear platen (130) and the link (154), and at least one of the first to third connection portions includes a height position changing mechanism which changes a height position of a connection pin (50) of the connection portion, and
at least one of a bearing portion (60, 60A to 60D) of the movable platen (120), a bearing portion (60, 60A to 60D) of the rear platen (130), and a bearing portion (60, 60A to 60D) of the link (151, 152, 153, 154) has a main body-side bearing portion (61) and a division bearing portion (62) which is removable from the main body-side bearing portion (61),
the main body-side bearing portion (61) and the division bearing portion (62) are horizontally divided, and
a height position of the connection pin (50) inserted into the bearing portion interferes with a height position of the tie bar (140).

5. An injection molding machine (10) comprising:
a stationary platen (110);
a toggle mechanism (150) which connects a movable platen (120) and a rear platen (130); and
a tie bar (140) which connects the stationary platen (110) and the rear platen (130) in mold opening and closing directions,
**characterized in that**
the toggle mechanism (150) includes
a plurality of links (151, 152, 153, 154),
a first connection portion which connects the movable platen (120) and the link (152),
a second connection portion which connects the links (152, 153) to each other, and
a third connection portion which connects the rear platen (130) and the link (154), and at least one of the first to third connection portions includes a height position changing mechanism which changes a height position of a connection pin (50) of the connection portion, and
at least one of a bearing portion (60, 60A to 60D) of the movable platen (120), a bearing portion (60, 60A to 60D) of the rear platen (130), and a bearing portion (60, 60A to 60D) of the link (151, 152, 153, 154) has a U-shaped bearing portion, and
a height position of the connection pin (50) inserted into the bearing portion interferes with a height position of the tie bar (140).

6. An injection molding machine (10) comprising:
a stationary platen (110);
a toggle mechanism (150) which connects a movable platen (120) and a rear platen (130); and
a tie bar (140) which connects the stationary platen (110) and the rear platen (130) in mold opening and closing directions,
**characterized in that**
the toggle mechanism (150) includes
a plurality of links (151, 152, 153, 154),
a first connection portion which connects the movable platen (120) and the link (152),
a second connection portion which connects the links (152, 153) to each other, and
a third connection portion which connects the rear platen (130) and the link (154), and at least one of the first to third connection portions includes a height position changing mechanism which changes a height position of a connection pin (50) of the connection portion, and
at least one of a bearing portion (60, 60A to 60D) of the movable platen (120), a bearing portion (60, 60A to 60D) of the rear platen (130), and a bearing portion (60, 60A to 60D) of the link (151, 152, 153, 154) has a slide bearing portion (62D) which slides with respect to a plate portion (61D) in a vertical direction, and
a height position of the connection pin (50) inserted into the bearing portion interferes with a height position of the tie bar (140).

## Patentansprüche

1. Spritzgießmaschine (10), umfassend:
eine stationäre Platte (110);
einen Kniehebelmechanismus (150), der eine bewegliche Platte (120) und eine hintere Platte (130) verbindet; und
eine Säule (140), die die stationäre Platte (110) und die hintere Platte (130) in Formöffnungs- und -schließrichtung verbindet,
**dadurch gekennzeichnet, dass**
der Kniehebelmechanismus (150) enthält
mehrere Bindeglieder (151, 152, 153, 154),
einen ersten Verbindungsabschnitt, der die bewegliche Platte (120) und das Bindeglied (152) verbindet,
einen zweiten Verbindungsabschnitt, der die Bindeglieder (152, 153) miteinander verbindet, und
einen dritten Verbindungsabschnitt, der die hintere Platte (130) und das Bindeglied (154) verbindet,
mindestens einer von dem ersten bis dritten Verbindungsabschnitt einen Höhenpositionsänderungsmechanismus enthält, der eine Höhenposition eines Verbindungsstifts (50) des Verbindungsabschnitts ändert,
mindestens eines von einem Lagerabschnitt (60, 60Abis 60D) der beweglichen Platte (120), einem Lagerabschnitt (60, 60A bis 60D) der hinteren Platte (130) und einem Lagerabschnitt (60, 60A bis 60D) des Bindeglieds (151, 152, 153, 154) einen hauptkörperseitigen Lagerabschnitt (61) und einen Teilungslagerabschnitt (62) aufweist, der von dem hauptkörperseitigen Lagerabschnitt (61) entfernbar ist,
der hauptkörperseitige Lagerabschnitt (61) und der Teilungslagerabschnitt (62) den Verbindungsstift (50) mit einem Abstand zwischen dem hauptkörperseitigen Lagerabschnitt (61) und dem Teilungslagerabschnitt (62) lagern, und
eine Höhenposition des in den Lagerabschnitt eingesetzten Verbindungsstifts (50) mit einer Höhenposition der Säule (140) interferiert.

2. Spritzgießmaschine (10) nach Anspruch 1, ferner umfassend:
eine Säule (140), die eine stationäre Platte (110) und die hintere Platte (130) verbindet.

3. Spritzgießmaschine (10) nach Anspruch 1,
wobei der hauptkörperseitige Lagerabschnitt (61) und der Teilungslagerabschnitt (62) vertikal geteilt sind.

4. Spritzgießmaschine (10), umfassend:
eine stationäre Platte (110);
einen Kniehebelmechanismus (150), der eine bewegliche Platte (120) und eine hintere Platte (130) verbindet; und
eine Säule (140), die die stationäre Platte (110) und die hintere Platte (130) in Formöffnungs- und -schließrichtung verbindet,
**dadurch gekennzeichnet, dass**
der Kniehebelmechanismus (150) enthält:
mehrere Bindeglieder (151, 152, 153, 154),
einen ersten Verbindungsabschnitt, der die bewegliche Platte (120) und das Bindeglied (152) verbindet,
einen zweiten Verbindungsabschnitt, der die Bindeglieder (152, 153) miteinander verbindet, und
einen dritten Verbindungsabschnitt, der die hintere Platte (130) und das Bindeglied (154) verbindet, und
mindestens einer von dem ersten bis dritten Verbindungsabschnitt einen Höhenpositionsänderungsmechanismus enthält, der eine Höhenposition eines Verbindungsstifts (50) des Verbindungsabschnitts ändert, und
mindestens eines von einem Lagerabschnitt (60, 60Abis 60D) der beweglichen Platte (120), einem Lagerabschnitt (60, 60A bis 60D) der hinteren Platte (130) und einem Lagerabschnitt (60, 60A bis 60D) des Bindeglieds (151, 152, 153, 154) einen hauptkörperseitigen Lagerabschnitt (61) und einen Teilungslagerabschnitt (62) aufweist, der von dem hauptkörperseitigen Lagerabschnitt (61) entfernbar ist,
der hauptkörperseitige Lagerabschnitt (61) und der Teilungslagerabschnitt (62) horizontal geteilt sind, und
eine Höhenposition des in den Lagerabschnitt eingesetzten Verbindungsstifts (50) mit einer Höhenposition der Säule (140) interferiert.

5. Spritzgießmaschine (10), umfassend:
eine stationäre Platte (110);
einen Kniehebelmechanismus (150), der eine bewegliche Platte (120) und eine hintere Platte (130) verbindet; und
eine Säule (140), die die stationäre Platte (110) und die hintere Platte (130) in Formöffnungs- und -schließrichtung verbindet,
**dadurch gekennzeichnet, dass**
der Kniehebelmechanismus (150) enthält:
mehrere Bindeglieder (151, 152, 153, 154),
einen ersten Verbindungsabschnitt, der die bewegliche Platte (120) und das Bindeglied (152) verbindet,
einen zweiten Verbindungsabschnitt, der die Bindeglieder (152, 153) miteinander verbindet, und
einen dritten Verbindungsabschnitt, der die hintere Platte (130) und das Bindeglied (154) verbindet, und
mindestens einer von dem ersten bis dritten Verbindungsabschnitt einen Höhenpositionsänderungsmechanismus enthält, der eine Höhenposition eines Verbindungsstifts (50) des Verbindungsabschnitts ändert, und
mindestens einer von einem Lagerabschnitt (60, 60Abis 60D) der beweglichen Platte (120), einem Lagerabschnitt (60, 60A bis 60D) der hinteren Platte (130) und einem Lagerabschnitt (60, 60Abis 60D) des Bindeglieds (151, 152, 153, 154) einen U-förmigen Lagerabschnitt aufweist, und
eine Höhenposition des in den Lagerabschnitt eingesetzten Verbindungsstifts (50) mit einer Höhenposition der Säule (140) interferiert.

6. Spritzgießmaschine (10), umfassend:
eine stationäre Platte (110);
einen Kniehebelmechanismus (150), der eine bewegliche Platte (120) und eine hintere Platte (130) verbindet; und
eine Säule (140), die die stationäre Platte (110) und die hintere Platte (130) in Formöffnungs- und -schließrichtung verbindet,
**dadurch gekennzeichnet, dass**
der Kniehebelmechanismus (150) enthält
mehrere Bindeglieder (151, 152, 153, 154),
einen ersten Verbindungsabschnitt, der die bewegliche Platte (120) und das Bindeglied (152) verbindet,
einen zweiten Verbindungsabschnitt, der die Bindeglieder (152, 153) miteinander verbindet, und
einen dritten Verbindungsabschnitt, der die hintere Platte (130) und das Bindeglied (154) verbindet, und
mindestens einer von dem ersten bis dritten Verbindungsabschnitt einen Höhenpositionsänderungsmechanismus enthält, der eine Höhenposition eines Verbindungsstifts (50) des Verbindungsabschnitts ändert, und
mindestens einer von einem Lagerabschnitt (60, 60Abis 60D) der beweglichen Platte (120), einem Lagerabschnitt (60, 60A bis 60D) der hinteren Platte (130) und einem Lagerabschnitt (60, 60A bis 60D) des Bindeglieds (151, 152, 153, 154) einen Gleitlagerabschnitt (62D) aufweist, der in Bezug auf einen Plattenabschnitt (61D) in einer vertikalen Richtung gleitet, und
eine Höhenposition des in den Lagerabschnitt eingesetzten Verbindungsstifts (50) mit einer Höhenposition der Säule (140) interferiert.

## Revendications

1. Une machine de moulage par injection (10) comprenant :
un plateau stationnaire (110) ;
un mécanisme de basculement (150) qui relie un plateau mobile (120) et un plateau arrière (130) ; et
une barre de liaison (140) qui relie le plateau stationnaire (110) et le plateau arrière (130) dans des directions d'ouverture et de fermeture de moule,
**caractérisée en ce que**
le mécanisme de basculement (150) comprend
une pluralité de liaisons (151, 152, 153, 154),
une première partie de raccordement qui relie le plateau mobile (120) et la liaison (152),
une seconde partie de raccordement qui relie les liaisons (152, 153) les unes aux autres, et
une troisième partie de raccordement qui relie le plateau arrière (130) et la liaison (154),
au moins l'une de la première à la troisième parties de raccordement comprend un mécanisme de changement de position en hauteur qui change une position en hauteur d'une broche de liaison (50) de la partie de raccordement,
au moins l'une d'une partie de support (60, 60A à 60D) du plateau mobile (120), d'une partie de support (60, 60A à 60D) du plateau arrière (130) et d'une partie de support (60, 60A à 60D) de la liaison (151, 152, 153, 154) possède une partie de support côté corps principal (61) et une partie de support à division (62) qui peut être retirée de la partie de support côté corps principal (61),
la partie de support côté corps principal (61) et la partie de support à division (62) supportent la broche de liaison (50) avec un espacement entre la partie de support côté corps principal (61) et la partie de support à division (62), et
une position en hauteur de la broche de liaison (50) insérée dans la partie de support interfère avec une position en hauteur de la barre de liaison (140).

2. La machine de moulage par injection (10) selon la revendication 1, comprenant en outre :
une barre de liaison (140) qui relie un plateau stationnaire (110) et le plateau arrière (130).

3. La machine de moulage par injection (10) selon la revendication 1, dans laquelle la partie de support côté corps principal (61) et la partie de support à division (62) sont divisées à la verticale.

4. Une machine de moulage par injection (10) comprenant :
un plateau stationnaire (110) ;
un mécanisme de basculement (150) qui relie un plateau mobile (120) et un plateau arrière (130) ; et
une barre de liaison (140) qui relie le plateau stationnaire (110) et le plateau arrière (130) dans des directions d'ouverture et de fermeture de moule,
**caractérisée en ce que**
le mécanisme de basculement (150) comprend
une pluralité de liaisons (151, 152, 153, 154),
une première partie de raccordement qui relie le plateau mobile (120) et la liaison (152),
une seconde partie de raccordement qui relie les liaisons (152, 153) les unes aux autres, et
une troisième partie de raccordement qui relie le plateau arrière (130) et la liaison (154), et au moins l'une de la première à la troisième parties de raccordement comprend un mécanisme de changement de position en hauteur qui change une position en hauteur d'une broche de liaison (50) de la partie de raccordement, et
au moins l'une d'une partie de support (60, 60A à 60D) du plateau mobile (120), d'une partie de support (60, 60A à 60D) du plateau arrière (130) et d'une partie de support (60, 60A à 60D) de la liaison (151, 152, 153, 154) possède une partie de support côté corps principal (61) et une partie de support à division (62) qui peut être retirée de la partie de support côté corps principal (61),
la partie de support côté corps principal (61) et la partie de support à division (62) sont divisées à l'horizontale, et
une position en hauteur de la broche de liaison (50) insérée dans la partie de support interfère avec une position en hauteur de la barre de liaison (140).

5. Une machine de moulage par injection (10) comprenant :
un plateau stationnaire (110) ;
un mécanisme de basculement (150) qui relie un plateau mobile (120) et un plateau arrière (130) ; et
une barre de liaison (140) qui relie le plateau stationnaire (110) et le plateau arrière (130) dans des directions d'ouverture et de fermeture de moule,
**caractérisée en ce que**
le mécanisme de basculement (150) comprend
une pluralité de liaisons (151, 152, 153, 154),
une première partie de raccordement qui relie le plateau mobile (120) et la liaison (152),
une seconde partie de raccordement qui relie les liaisons (152, 153) les unes aux autres, et
une troisième partie de raccordement qui relie le plateau arrière (130) et la liaison (154), et au moins l'une de la première à la troisième parties de raccordement comprend un mécanisme de changement de position en hauteur qui change une position en hauteur d'une broche de liaison (50) de la partie de raccordement, et
au moins l'une d'une partie de support (60, 60A à 60D) du plateau mobile (120), d'une partie de support (60, 60A à 60D) du plateau arrière (130) et d'une partie de support (60, 60A à 60D) de la liaison (151, 152, 153, 154) possède une partie de support en forme de U, et
une position en hauteur de la broche de liaison (50) insérée dans la partie de support interfère avec une position en hauteur de la barre de liaison (140).

6. Una machine de moulage par injection (10) comprenant :
un plateau stationnaire (110) ;
un mécanisme de basculement (150) qui relie un plateau mobile (120) et un plateau arrière (130) ; et
une barre de liaison (140) qui relie le plateau stationnaire (110) et le plateau arrière (130) dans des directions d'ouverture et de fermeture de moule,
**caractérisée en ce que**
le mécanisme de basculement (150) comprend
une pluralité de liaisons (151, 152, 153, 154),
une première partie de raccordement qui relie le plateau mobile (120) et la liaison (152),
une seconde partie de raccordement qui relie les liaisons (152, 153) les unes aux autres, et
une troisième partie de raccordement qui relie le plateau arrière (130) et la liaison (154), et au moins l'une de la première à la troisième parties de raccordement comprend un mécanisme de changement de position en hauteur qui change une position en hauteur d'une broche de liaison (50) de la partie de raccordement, et
au moins l'une d'une partie de support (60, 60A à 60D) du plateau mobile (120), d'une partie de support (60, 60A à 60D) du plateau arrière (130) et d'une partie de support (60, 60A à 60D) de la liaison (151, 152, 153, 154) possède une partie de support coulissante (62D) qui coulisse par rapport à une partie de plaque (61D) dans une direction verticale, et
une position en hauteur de la broche de liaison (50) insérée dans la partie de support interfère avec une position en hauteur de la barre de liaison (140).
